# EUROPÄISCHE PATENTSCHRIFT

(11) **EP 0 982 354 B1**
(45) Veröffentlichungstag und Bekanntmachung des Hinweises auf die Patenterteilung: **05.11.2003**
(21) Anmeldenummer: 99116444.3
(22) Anmeldetag: 21.08.1999
(51) Int. Cl.: C08K 3/08, C08K 9/02, C08L 21/00, B60C 1/00

(54) **Kautschukmischung**
Rubber composition
Composition de caoutchouc

(30) Priorität: 28.08.1998 DE 19839271
(43) Veröffentlichungstag der Anmeldung: 01.03.2000
(73) Patentinhaber: Continental Aktiengesellschaft, 30165 Hannover (DE)
(72) Erfinder: Meier, Heinrich, 31707 Heessen (DE); Teves, Reinhard, Dr., 30926 Seelze (DE)

(56) Entgegenhaltungen:
- EP-A- 0 117 904
- FR-A- 1 018 848
- US-A- 3 006 873

## Beschreibung

Die Erfindung betrifft eine nichtschwarze Seitenwandkautschukmischung für Kraftfahrzeugluftreifen, die als Polymer ein oder mehrere Kautschukkomponenten, als ersten Füllstoff zumindest Kieselsäure sowie weiterhin Verarbeitungshilfsmittel und weitere übliche Zusatzstoffe enthält.

Seitenwandkautschukmischungen für Kraftfahrzeugluftreifen müssen hohen Anforderungen gerecht werden. So müssen sie mechanisch/dynamisch sehr belastbar sein, um z. B. beim Überfahren von hohen Kanten keine Schäden zu erleiden. Auch sollte die Seitenwand eines Kraftfahrzeugluftreifens abriebsbeständig sein, um beim Scheuern an Bordsteinkanten möglichst nicht beschädigt zu werden. Des weiteren sind sie wie kein anderes Reifenbauteil der Sonnenstrahlung ausgesetzt, so daß die Elastomermischung entsprechend alterungsbeständig ausgebildet sein muß. Da die Seitenwand insbesondere beim stehenden Fahrzeug der Blickfang des Reifens ist, ist sie besonders als Gestaltungsobjekt geeignet. So zählen farbige Beschriftungen bis hin zu farbigen Seitenwänden zum Stand der Technik. Für solche Ausgestaltungen sind aber auch Elastomermischungen gefragt, die die oben genannten Eigenschaften besitzen sollten und zusätzlich über die gesamte Lebensdauer eines Kraftfahrzeugluftreifens farblich stabil sein sollten.

Aus der DE 34 14 438 A1 und der DE-G 82 34 954.1 (bzw. EP-A-0 117 904) sind Varianten bekannt, bei denen entweder eine schwarze Seitenwand mit einer durchscheinenden Elastomerschicht überdeckt ist, die Glimmerplättchen enthält oder die gesamte Seitenwand aus einer solchen durchscheinenden Elastomermischung besteht, die Glimmerplättchen aufweist. Diese Glimmerplättchen, die auch Ummantelungen aus Metalloxiden aufweisen können, sollen der entsprechenden Elastomermatrix ein gutes Reflexionsvermögen verleihen. Es mußte aber festgestellt werden, daß zwar eine ausreichende Reflexion erzielt wird, allerdings diese Mischungen im Laufe der Zeit gelblich schimmerteten. Zusätzliche Elastomerschichten aus der DE 34 14 438 A1 haben den weiteren Nachteil, daß sie außer ihrer Bereitstellung auch noch in einem Extra-Verfahrensschritt auf die Seitenwand aufgebracht werden, was Kostenund Zeitaufwand mit sich bringt Außerdem können Trennungen zwischen den einzelnen Schichten auftreten.

Die Aufgabe der vorliegenden Erfindung besteht darin, verfahrenstechnisch einfach Seitenwände von Kraftfahrzeugluftreifen zu erzeugen, die sowohl ein hervorragendes Reflexionsvermögen als auch eine langlebige brilliante, silbrig scheinende Farbgebung aufweisen.

Gelöst wird diese Aufgabe erfindungsgemäß dadurch, daß sie bezogen auf 100 Gewichtsteile der gesamten Kautschukkomponenten,
a) als zweiten Füllstoff 5 bis 30 phr zumindest eines plättchenförmigen mit Metalloxid ummantelten Glimmers mit einer mittleren Teilchengröße bis zu 2 · 10⁻⁴ m und weiterhin
b) als dritten Füllstoff 0,1 bis 8 phr Aluminiumpulver mit einer mittleren Teilchengröße bis zu 8 · 10⁻⁵ m aufweist.

Überraschender Weise zeigt eine solche Seitenwandkautschukmischung im vulkanisierten Zustand ein sehr gutes Reflexionsvermögen in Kombination mit einem ausgezeichneten silbrig scheinenden Glanz. Diese Eigenschaftskombination war nicht zu erwarten, da einerseits Versuche mit Gummimischungen, die nur Aluminiumpulver enthielten Reifenseitenwände ergaben, die entweder keinen metallischen Glanz hatten (bei geringen Aluminiumpulverkonzentrationen) oder mit der Zeit Reaktionen mit Mischungsbestandteilen eingingen, die die Reifenseitenwand grau erscheinen ließ (bei höheren Aluminiumpulverkonzentrationen). Andererseits traten bei Reifenseitenwänden, die nur mit Metalloxid ummantelten Glimmer als Füllstoff enthielten, wie bereits erwähnt, gelbliche Verfärbungen auf. Um so überraschender war es festzustellen, daß durch die erfindungsgemäße Kombination das Problem der Verfärbungen gelöst wurde und gleichzeitig ein optisch schöner metallischer Glanz bei einer hervorragenden Reflexion erzielt wurde.

in der erfindungsgemäßen Seitenwandkautschukmischung ist als erster Füllstoff Kieselsäure, bevorzugt in einer Menge von 10 bis 60 phr, enthalten, da diese eine hervorragende Transparenz aufweist und somit der Kraftfahrzeugluftreifenseitenwand zu dem entsprechenden Aussehen verhilft. Auch werden Vorteile hinsichtlich des Abriebs verzeichnet. Weiterhin wird die verstärkende Wirkung der Kieselsäure ausgenutzt, wobei festgestellt wurde, daß bei Konzentrationen > 60 phr die dynamische Tüchtigkeit des Vulkanisates nachließ, so daß vorteilhafterweise diese Konzentration, insbesondere für Reifenseitenwände, nicht überschritten werden sollte. Die in der erfindungsgemäßen Kautschukmischung zur Anwendung kommende Kieselsäure ist aus dem Stand der Technik bekannt. So sollen Kieselsäure mit einer BET-Oberfläche von 145 - 270 m²/g (ASTM D 5604), einer CTAB-Zahl von 120 - 285 m²/g (ASTM D 3765) und einem Porenvolumen von 0,7 - 1,7 ml/g (DIN 66133) Verwendung finden. Als Kieselsäure kann somit z. B. VN3 (Handelsname der Firma Degussa) zum Einsatz kommen.

Zur Anbindung der Kieselsäure an das Polymersystem werden Aktivierungsmittel, z. B. Silane wie Bis-3-(triethoxysilylpropyl)tetrasulfid (TESPT) bzw. das entsprechende Disulfid verwendet, die anmeldungsgemäß zu den üblichen Zusatzstoffen zu zählen sind.

Außerdem enthält die erfindungsgemäße Kautschukmischung weitere übliche Zusatzstoffe wie nichtverfärbende Alterungsschutzmittel (z. B. styrolisierte Phenole oder 2,6 - Di-tert.-butyl-p-kresol (BHT), Weichmacher (z. B. Phthalsäureester) und Verarbeitungshilfsmittel (z. B. Stearinsäure, Wachse, Fette, Dispergatoren). Besonders bevorzugt ist, wenn als Verarbeitungshilfsmittel ein nicht verfärbendes Phenolharz verwendet wird, was verarbeitungstechnische Vorteile z. B. hinsichtlich der Fließfähigkeit und der Konfektionsklebrigkeit der Kautschukmischung mit sich bringt.

Zur Vulkanisation der Kautschukmischung können Schwefel bzw. Schwefelspender (z. B.: DTDM-Dimorpholyldisutfid) verwendet werden. Es ist aber auch möglich die Vulkanisation unter Zuhilfenahme anderer Vulkanisationsmittel (z.B. Peroxide, Harze, Strahlung) ablaufen zu lassen. Außerdem werden vulkanisationsbeeinflussende Stoffe wie Beschleuniger oder Aktivatoren für die entsprechende Vulkanisationsart (z. B. für die Schwefeivulkanisation - z. B. CBS: Benzothiazyl-2-cyclohexylsulfenamid, TMTD: Tetramethylthiuramdisulfid, TBBS: Benzothiazyl-2-tert.butylsulfenamid) der Kautschukmischung zugesetzt.

Besonders bevorzugt ist wenn die nichtschwarze Seitenwandkautschukmischung einen Anteil an Aluminiumpulver von ≤ 1 phr, z. B. 0,2 bis 0,7 phr, aufweist. Es war überraschend festzustellen, das solch geringe Menge ausreichen, um bereits einen metallischen Glanzeffekt zu erzielen. Weiterhin ist eine mittlere Teilchengröße des Aluminiumpulvers < 5 · 10⁻⁵ m bevorzugt. Durch den größeren Streueffekt der kleineren Teilchen wird der Glanz der Kraftfahrzeugreifenseitenwand weiter erhöht.

Der in der erfindungsgemäßen Seitenwandkautschukmischung zur Anwendung kommende Glimmer ist ein Tonerdesilicat (z. B. Biotit oder Muskovit), das mit einem Metalloxid, vorzugsweise z. B. mit Titaniumdioxid, beschichtet wurde. Bevorzugt ist, wenn der Anteil an mit Metalloxid beschichtetem Glimmer 8 bis 20 phr beträgt Durch die Kombination von mehreren einzelnen Teilchengrößenfraktionen kann das Reflexionsvermögen der Kraftfahrzeugluftreifenseitenwand optimiert werden.

Zusätzlich sind ein oder mehrere noch anderer Füllstoffe denkbar, wie z. B. organische Farbstoffe und/oder Pigmente die aber die Reflexion und den metallischen Glanz der Reifenseitenwand nicht behindern sollten. Dadurch werden reflektierende und farbig brilliant silbrig scheinende Kraftfahrzeugluftreifenseitenwände erzeugt.

Die Kautschukkomponenten für die erfindungsgemäße Seitenwandmischung sind ausgewählt aus z. B. Ethylen-Propylen-Dien-Terpolyrner, Polyisopren, Styren-Butadien-Copolymer, besonders bevorzugt Naturkautschuk, Butylkautschuk, halogenierten Butylkautschuk, Polybutadien und/oder ein mit p-Brommethylstyren modifiziertes Isobutylen-Polymer.

Mit der erfindungsgemäßen Seitenwandkautschukmischung werden Reifenseitenwände erzeugt, die einerseits hervorragende optische Eigenschaften (Reflexion und metallischen Glanz) aufweisen und gleichzeitig den mechanisch/dynamischen Anforderungen hinsichtlich Eigenschaften z. B. Abriebsbeständigkeit und Ozonrißbeständigkeit gerecht wird. Außerdem müssen keine zusätzlichen Verarbeitungsschritte bei der Herstellung des Reifens, wie es z. B. durch ein nachträgliches Auflegen einer Folie der Fall ist, durchgeführt werden. Besonders bevorzugt ist, wenn die nichtschwarze Seitenwandkautschukmischung für die Herstellung von PKW-Reifen verwendet wird, da in diesem Segment die Nachfrage nach reflektierenden und brilliant glänzenden Seitenwänden vom Kunden besonders groß ist.

Anhand eines Ausführungsbeispiels soll die Erfindung näher erläutert werden:

**Tabelle**

| | ***Vergleichsmischungen [phr]*** | ***Erfindungsgemäße Mischung [phr]*** | |
|---|---|---|---|
| **Bestandteile** | **1** | **2** | **3** |
| Naturkautschuk | 25 | 25 | 25 |
| Polybutadien | 30 | 30 | 30 |
| EXXPRO 3745* | 45 | 4 | 45 |
| Ruß N 660 | 0,1 | - | - |
| Kieselsäure VN3** | 50 | 50 | 30 |
| Silan Si69** | 4 | 4 | 2,4 |
| Iriodin 103*** | - | 5 | 5 |
| Iriodin 123*** | - | 5 | 5 |
| Iriodin 163*** | - | 5 | 5 |
| Aluminiumpulver | - | - | 1 |
| Mineralisches Öl | 8 | 8 | 8 |
| Bisphenolisches Alterungsschutzmittel | 4 | - | - |
| Durez 19900**** | 10 | 10 | 10 |
| Stearinsäure | 1 | 1 | 1 |
| ZnO | 3 | 3 | 3 |
| TiO₂ | 10 | - | - |
| Schwefel | 0,6 | 0,6 | 0,6 |
| Beschleuniger MBTS | 1,5 | 1,5 | 1,5 |

| | | | |
|---|---|---|---|
| * Fa. EXXON Chemical, USA | | | |
| ** Fa. Degussa AG, Frankfurt/M., Deutschland | | | |
| *** Fa. Merck, Darmstadt, Deutschland, Iriodin® 103: mit Titandioxid ummantelter Glimmer, 66-74 % Glimmer, 26-33 % Titandioxid, Korngröße 10-60 um, Iriodin® 123: mit Titandioxid ummantelter Glimmer, 57-65 % Glimmer, 35-42 % Titandioxid, Korngröße 5-25 µm, Iriodin® 163: mit Titandioxid ummantelter Glimmer, 83-88 % Glimmer, 12-16 % Titandioxid, Korngröße 20-180 µm, | | | |
| **** Fa. Occidental Chem. Genk., Belgien | | | |

Die in der Tabelle angegebenen Bestandteile wurden auf herkömmliche Art und Weise miteinander vermischt. Nach der Konfektionierung des Kraftfahrzeugluftreifenrohlings, wobei die angegebnen Zusammensetzungen für die Seitenwände verwendet wurden, wurde dieser unter herkömmlichen Bedingungen der Vulkanisation unterzogen. Nach dessen Vulkanisation wurde beobachtet daß, der Reifen mit der Seitenwandzusammensetzung 1 eine graue Färbung ohne Reflexionsvermögen und metallischen Glanz aufwies. Der Reifen mit der Seitenwandzusammensetzung 2 hatte den Nachteil, daß die Seitenwand im Laufe der Zeit eine gelbliche Verfärbung zeigte. Im Vergleich dazu besaß die Zusammensetzung 3 die besten Ergebnisse hinsichtlich Reflexionsvermögen und metallischen Glanz. Außerdem konnte beobachtet werden, daß keine Eigenschaftseinbußen hinsichtlich der Alterungsbeständigkeit oder des mechanisch/dynamischen Verhaltens der Seitenwandmischung 3 hingenommen werden mußten. Durch die erfindungsgemäße Kombination für Reifenseitenwandmischungen konnte weiterhin auf die zusätzliche Anbringung von z. B. farblichen Folien verzichtet werden, wobei somit das z. B. Problem der Auftrennung von einzelnen Schichten vermieden wurde.

## Patentansprüche

1. Nichtschwarze Seitenwandkautschukmischung für Kraftfahrzeugluftreifen, die als Polymer ein oder mehrere Kautschukkomponenten, als ersten Füllstoff zumindest Kieselsäure sowie weiterhin Verarbeitungshilfsmittel und weitere übliche Zusatzstoffe enthält, **dadurch gekennzeichnet, daß** sie bezogen auf 100 Gewichtsteile der gesamten Kautschukkomponenten,
a) als zweiten Füllstoff 5 bis 30 phr zumindest eines plättchenförmigen mit Metalloxid ummantelten Glimmers mit einer mittleren Teilchengröße bis zu 2 · 10⁻⁴ m und
b) als dritten Füllstoff 0,1 bis 8 phr Aluminiumpulver mit einer mittleren Teilchengröße bis zu 8 · 10⁻⁵ m aufweist.

2. Nichtschwarze Seitenwandkautschukmischung nach Anspruch 1, **dadurch gekennzeichnet, daß** der Anteil des Aluminiumpulvers ≤ 1 phr beträgt.

3. Nichtschwarze Seitenwandkautschukmischung nach zumindest einem der vorhergehenden Ansprüche, **dadurch gekennzeichnet, daß** die mittlere Teilchengröße des Aluminiumpulvers < 5 · 10⁻⁵ m beträgt.

4. Nichtschwarze Seitenwandkautschukmischung nach zumindest einem der vorhergehenden Ansprüche, **dadurch gekennzeichnet, daß** der mit Metalloxid beschichtete Glimmer in mehreren einzelnen Teilchengrößenfraktionen der Kautschukmischung zugegeben wird.

5. Nichtschwarze Seitenwandkautschukmischung nach zumindest einem der vorhergehenden Ansprüche, **dadurch gekennzeichnet, daß** der Anteil an mit Metalloxid beschichtetem Glimmer 8 bis 20 phr beträgt.

6. Nichtschwarze Seitenwandkautschukmischung nach zumindest einem der vorhergehenden Ansprüche, **dadurch gekennzeichnet, daß** das Metalloxid des beschichteten Glimmers Titaniumdioxid ist.

7. Nichtschwarze Seitenwandkautschukmischung nach zumindest einem der vorhergehenden Ansprüche, **dadurch gekennzeichnet, daß** der Anteil an Kieselsäure 10 bis 60 phr beträgt.

8. Nichtschwarze Seitenwandkautschukmischung nach zumindest einem der vorhergehenden Ansprüche, **dadurch gekennzeichnet, daß** sie als weiteren Füllstoff ein oder mehrere Farbstoffe und/oder Pigmente enthält.

9. Nichtschwarze Seitenwandkautschukmischung nach zumindest einem der vorhergehenden Ansprüche, **dadurch gekennzeichnet, daß** die Kautschukkomponenten ausgewählt sind aus Naturkautschuk und/oder Polybutadien und/oderButylkautschuk und/oder halogenierten Butylkautschuk und/oder ein mit p-Brommethylstyren modifiziertes Isobutylen-Polymer.

10. Nichtschwarze Seitenwandkautschukmischung nach zumindest einem der vorhergehenden Ansprüche, **dadurch gekennzeichnet, daß** die Kautschukmischung als Verarbeitungshilfsmittel ein nicht verfärbendes Phenolharz enthält.

11. Fahrzeugluftreifen unter Verwendung der nichtschwarzen Seitenwandkautschukmischung nach zumindest einem der vorhergehenden Ansprüche, der nach der Vulkanisation einen üblichen Laufstreifengummi und eine silbrig scheinende Seitenwand aufweist.

## Claims

1. Non-black sidewall rubber mixture for pneumatic automotive vehicle tyres, which mixture contains one or more rubber components as the polymer, at least silica as the first filler, and also processing adjuvants and additional conventional additives, **characterised in that** it has, relative to 100 parts by weight of the total rubber component,
a) 5 to 30 phr of at least one mica wafer, which is surrounded with metal oxide and has a mean particle size up to 2 · 10⁻⁴ m, as the second filler and
b) 0.1 to 8 phr aluminium powder, having a mean particle size up to 8 · 10⁻⁵ m, as the third filler.

2. Non-black sidewall rubber mixture according to claim 1, **characterised in that** the proportion of the aluminium powder is ≤ 1 phr.

3. Non-black sidewall rubber mixture according to at least one of the preceding claims, **characterised in that** the mean particle size of the aluminium powder is < 5 · 10⁻⁵ m.

4. Non-black sidewall rubber mixture according to at least one of the preceding claims, **characterised in that** the mica, coated with metal oxide, is added to the rubber mixture in a plurality of individual of particle size fractions.

5. Non-black sidewall rubber mixture according to at least one of the preceding claims, **characterised in that** the proportion of mica, coated with metal oxide, is 8 to 20 phr.

6. Non-black sidewall rubber mixture according to at least one of the preceding claims, **characterised in that** the metal oxide of the coated mica is titanium dioxide.

7. Non-black sidewall rubber mixture according to at least one of the preceding claims, **characterised in that** the proportion of silica is 10 to 60 phr.

8. Non-black sidewall rubber mixture according to at least one of the preceding claims, **characterised in that** it contains, as an additional filler, one or more dyestuffs and/or pigments.

9. Non-black sidewall rubber mixture according to at least one of the preceding claims, **characterised in that** the rubber components are selected from natural rubber and/or polybutadiene and/or butyl rubber and/or halogenated butyl rubber and/or an isobutylene polymer modified with p-bromomethyl styrene.

10. Non-black sidewall rubber mixture according to at least one of the preceding claims, **characterised in that** the rubber mixture contains, as the processing adjuvant, a non-discolouring phenolic resin.

11. Pneumatic vehicle tyre, using the non-black sidewall rubber mixture according to at least one of the preceding claims, which tyre has, after the vulcanisation, a conventional rubber tread strip and a silver-shining sidewall.

## Revendications

1. Composition de caoutchouc non noire pour flancs de pneumatiques pour véhicules automobiles, contenant comme polymère un ou plusieurs composants de caoutchouc, comme première charge au moins de l'acide silicique, ainsi que d'autres auxiliaires de transformation et d'autres additifs usuels, **caractérisée en ce qu'**elle présente, rapportée à 100 parties en poids de l'ensemble des composants de caoutchouc,
a) comme deuxième charge 5 à 30 phr d'au moins un mica sous forme lamellaire revêtu d'un oxyde métallique, ayant une dimension moyenne de particule allant jusqu'à 2x10⁻⁴ m et
b) comme troisième charge 0,1 à 8 phr de poudre d'aluminium ayant une dimension moyenne de particule allant jusqu'à 8x10⁻⁵ m.

2. Composition de caoutchouc non noire pour flancs selon la revendication 1, **caractérisée en ce que** la proportion de poudre d'aluminium est ≤ 1 phr.

3. Composition de caoutchouc non noire pour flancs selon au moins l'une des revendications précédentes, **caractérisée en ce que** la dimension moyenne des particules de poudre d'aluminium est < 5x10⁻⁵ m.

4. Composition de caoutchouc non noire pour flancs selon au moins l'une des revendications précédentes, **caractérisée en ce que** le mica revêtu d'un oxyde métallique est additionné à la composition de caoutchouc en plusieurs fractions différentes de dimension de particule.

5. Composition de caoutchouc non noire pour flancs selon au moins l'une des revendications précédentes, **caractérisée en ce que** la proportion de mica revêtu d'un oxyde métallique est comprise entre 8 et 20 phr.

6. Composition de caoutchouc non noire pour flancs selon au moins l'une des revendications précédentes, **caractérisée en ce que** l'oxyde métallique revêtant le mica est le dioxyde de titane.

7. Composition de caoutchouc non noire pour flancs selon au moins l'une des revendications précédentes, **caractérisée en ce que** la proportion d'acide silicique est comprise entre 10 et 60 phr.

8. Composition de caoutchouc non noire pour flancs selon au moins l'une des revendications précédentes, **caractérisée en ce qu'**elle contient comme autre charge un ou plusieurs colorants et/ou pigments.

9. Composition de caoutchouc non noire pour flancs selon au moins l'une des revendications précédentes, **caractérisée en ce que** les composants de caoutchouc sont choisis parmi le caoutchouc naturel et/ou le polybutadiène et/ou le caoutchouc butyle et/ou le caoutchouc butyle halogéné et/ou un polymère isobutylène modifié par du p-bromométhylstyrène.

10. Composition de caoutchouc non noire pour flancs selon au moins l'une des revendications précédentes, **caractérisée en ce que** la composition de caoutchouc contient comme auxiliaire de transformation une résine phénolique non décolorante.

11. Pneumatiques pour véhicules automobiles utilisant la composition de caoutchouc pour flancs selon au moins l'une des revendications précédentes, présentant après la vulcanisation un caoutchouc usuel pour la bande de roulement et un flanc ayant reflet argenté.
